# EUROPEAN PATENT APPLICATION

(11) **EP 2 011 827 A1**
(43) Date of publication of application: **07.01.2009**
(21) Application number: 07714637.1
(22) Date of filing: 21.02.2007
(51) Int. Cl.: C08L 67/00, C08G 63/91, C08K 5/09, C08K 5/29, C08K 5/521, C08K 5/57, C08L 63/00, C08L 79/00

(54) **POLYESTER RESIN COMPOSITION AND MOLDED BODY**

(30) Priority: 24.03.2006 JP 2006083956
(71) Applicant: DAICEL CHEMICAL INDUSTRIES, LTD., Osaka-shi, Osaka 530-0001 (JP)
(72) Inventor: SAKANE, Masanori, Otake-shi, Hiroshima 739-0601 (JP)
(74) Representative: Grünecker, Kinkeldey, Stockmair & Schwanhäusser Anwaltssozietät
(86) International application number: PCT/JP2007/053137
(87) International publication number: WO 2007/111059

(57) **Abstract**

A polyester-series resin composition comprises (A) a polyester block copolymer, (B) a polyepoxy compound and (C) a polycarbodiimide compound. The copolymer (A) is obtainable by a reaction of (a1) a crystalline aromatic polyester and (a2) a lactone, and if necessary (a3) at least one compound selected from the group consisting of a polycarboxylic acid or an ester-formable derivative thereof and a polyol or an ester-formable derivative thereof in the presence of an acidic phosphate ester and a tin compound. Such a resin composition is particularly excellent in recycling efficiency (or thermal cycling resistance) and is useful for blow molding.

## Description

### TECHNICAL FIELD

The present invention relates to a polyester-series resin composition excellent in properties such as thermal cycling resistance (or heat cycling resistance) and hydrolysis resistance, and a molded article thereof.

### BACKGROUND ART

A polyester block copolymer obtained from an aromatic polyester and a lactone as a raw material is excellent in rubber elasticity and weather resistance. There has been known that such a copolymer can be produced by, for example, a method which comprises allowing a crystalline aromatic polyester to react with a lactone in the presence of a catalyst (e.g., a tin compound, and a titanium compound) (Japanese Examined Patent Publication (Kokoku) No. 48-4116, Patent Document 1), a method which comprises subjecting a lactone to solid-phase polymerization using a catalyst in the presence of a crystalline aromatic polyester (Japanese Examined Patent Publication (Kokoku) No. 52-49037, Patent Document 2) or other method. However, such a polyester block copolymer is insufficient in hydrolysis resistance, and a long-term exposure of such a polyester block copolymer under a high humid environment brings about remarkable deterioration in properties such as melt viscosity, tensile strength and tensile elongation.

Therefore, in order to improve hydrolysis resistance of these polyester block copolymers, some methods are under investigation. For example, Japanese Patent Publication No. 3693152 (JP-3693152B, Patent Document 3) discloses a polyester elastomer composition which comprises a polyester-series block copolymer, a compound having not less than two functional groups reactive to polyester end(s) per one molecule (e.g., a bisphenol A-glycidyl ether, a polycarbodiimide, and a bisoxazoline compound), and a stabilizer having a tertiary amine skeleton, and which has a weight loss of not more than 0.4% at 150°C for 2 hours and has a gelation degree of not more than 50% at 250°C for 4 hours. Japanese Patent Application Laid-Open No. 153226/1999 (JP-11-153226A, Patent Document 4) discloses a resinous flexible boot formed from a thermoplastic polyester elastomer, in which the elastomer comprises a polyester block copolymer and a two or more functional epoxy compound in a proportion of 0.01 to 10 parts by weight of the epoxy compound relative to 100 parts by weight of the polyester block copolymer. Moreover, Japanese Patent Application Laid-Open No. 160362/1975 (JP-50-160362A, Patent Document 5) discloses a thermoplastic polyester block copolymer composition which comprises a thermoplastic polyester block copolymer comprising an aromatic crystalline polyester segment and a polylactone segment, and a polycarbodiimide having at least two carbodiimide groups per one molecule and having a molecular weight of not less than 500. Japanese Patent Application Laid-Open No. 152951/1984 (JP-59-152951A, Patent Document 6) discloses a polyester-based block copolymer composition in which a mono- or polyfunctional epoxy compound (mono- or polyepoxy compound) and a heat stabilizer are mixed to a polyester-based block copolymer obtained by a reaction of a crystalline aromatic polyester and a lactone. Japanese Patent Application Laid-Open No. 264156/1992 (JP-4-264156A, Patent Document 7) discloses a polyester-polyester block copolymer composition which comprises 100 parts by weight of a polyester-polyester block copolymer containing a crystalline aromatic polyester as a hard segment and a polylactone as a soft segment, and (a) 0.01 to 10 parts by weight of a mono- or polyfunctional epoxy compound (mono- or polyepoxy compound) and (b) 0.01 to 1 part by weight of phosphite compound.

However, while these compositions are improved in hydrolysis resistance to some extent, the melting point of these compositions lowers with molding. Moreover, since repetition of heating and melting of these compositions drastically lowers the melting point, heat resistance of a molded product made from a recycled resin cannot be improved in an application (e.g., blow molding) in which recycling efficiency is required.
[Patent Document 1] Japanese Examined Patent Publication (Kokoku) No. 48-4116
[Patent Document 2] Japanese Examined Patent Publication (Kokoku) No. 52-49037
[Patent Document 3] JP-3693152B (Claim 1)
[Patent Document 4] JP-11-153226A (Claim 1)
[Patent Document 5] JP-50-160362A (Claims)
[Patent Document 6] JP-59-152951A
[Patent Document 7] JP-4-264156A

### DISCLOSURE OF THE INVENTION

### PROBLEMS TO BE SOLVED BY THE INVENTION

It is therefore an object of the present invention to provide a polyester-series resin composition which inhibits lowering of a melting point in a resin contained therein even in the case of being repeatedly heat-melted and is excellent in thermal cycling resistance, and a molded article thereof.

Another object of the present invention is to provide a polyester-series resin composition which ensures both thermal cycling resistance and hydrolysis resistance, and a molded article thereof.

It is still another object of the present invention to provide a polyester-series resin composition which hardly deteriorates (or degenerates) even in the case of being used for such an application as exposed under a high humid atmosphere for a long time, and is excellent in recycling efficiency, and a molded article thereof.

### MEANS TO SOLVE THE PROBLEMS

The inventor of the present invention made intensive studies to achieve the above objects and finally found that combination of (A) polyester block copolymer which is obtainable by a reaction of (a1) a crystalline aromatic polyester and (a2) a lactone in the presence of an acidic phosphate ester and a tin compound, (B) a polyepoxy compound and/or (C) a polycarbodiimide compound inhibits lowering of a melting point in a resin contained therein even in the case of being repeatedly heat-melted and improves thermal cycling resistance. The present invention has been accomplished based on the above findings.

That is, the polyester-series resin composition of the present invention comprises (A) a polyester block copolymer, and at least one member selected from the group consisting of (B) a polyepoxy compound (or polyfunctional epoxy compound or a compound having a plurality of epoxy groups) and (C) a polycarbodiimide compound, wherein the polyester block copolymer (A) is a block copolymer obtainable by a reaction of (a1) a crystalline aromatic polyester and (a2) a lactone in the presence of an acidic phosphate ester and a tin compound.

Moreover, the polyester block copolymer (A) may be a block copolymer which is obtainable by a reaction of the crystalline aromatic polyester (a1), the lactone (a2), and (a3) at least one compound selected from the group consisting of a polycarboxylic acid which may have a hydroxyl group, a polyol which may have a carboxyl group, and ester-formable derivatives thereof in the presence of the acidic phosphate ester and the tin compound, wherein the polycarboxylic acid may have a total of a carboxyl group and a hydroxyl group of not less than three per one molecule, and the polyol may have a total of a carboxyl group and a hydroxyl group of not less than three per one molecule.

The acidic phosphate ester may comprise a mono- or dialkyl phosphate, and the tin compound may comprise at least one member selected from the group consisting of a tin halide, a tin salt of a carboxylic acid and an alkyltin oxide.

In the resin composition, the proportion of the polyepoxy compound (B) relative to 100 parts by weight of the polyester block copolymer (A) may be about 0.05 to 5 parts by weight, and the proportion of the polycarbodiimide compound (C) relative to 100 parts by weight of the polyester block copolymer (A) may be about 0.05 to 5 parts by weight. In the polyester block copolymer (A), the proportion (weight ratio) of the crystalline aromatic polyester (a1) relative to the lactone (a2) may be about 30/70 to 97/3 as [(a1)/(a2)]. Moreover, the proportion of the compound (a3) relative to 100 parts by weight of the total amount of the crystalline aromatic polyester (a1) and the lactone (a2) may be about 0.0005 to 2 parts by weight. Relative to 100 parts by weight of the total amount of the crystalline aromatic polyester (a1) and the lactone (a2), the proportion of the acidic phosphate ester may be about 0.0001 to 0.03 part by weight and the proportion of the tin compound may be about 1 to 10 parts by weight.

The polyepoxy compound (B) may be at least one member selected from the group consisting of an alicyclic epoxy compound and a glycidyl ester-series epoxy compound (or a glycidyl-series epoxy compound). The polycarbodiimide compound (C) may be a compound having a constituent unit represented by the following formula: 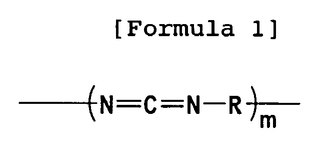 wherein R represents a bivalent hydrocarbon group which may have a substituent, and "m" denotes an integer of not less than 2.
In the process of the present invention, a polyester-series resin composition is produced, which process comprises
allowing (a1) a crystalline aromatic polyester to react with (a2) a lactone in the presence of an acidic phosphate ester and a tin compound to give (A) a polyester block copolymer, and
(i) mixing the polyester block copolymer (A), and at least one member selected from the group consisting of (B) a polyepoxy compound and (C) a polycarbodiimide compound.
Moreover, the present invention includes a polyester-series resin composition obtainable by such a process.

The present invention also includes a molded article formed from the resin composition (e.g., a blow-molded article).

### EFFECTS OF THE INVENTION

According to the present invention, combination of a specific polyester block copolymer with a polyepoxy compound and/or a polycarbodiimide compound ensures to inhibit lowering of a melting point in a resin contained therein even in the case of being repeatedly heat-melted and improve thermal cycling resistance. Moreover, such a combination ensures both thermal cycling resistance and hydrolysis resistance at a high level. Further, in the case of being used for such an application as exposed under a high humid atmosphere for a long time, the resin deterioration can be inhibited so as to improve the recycling efficiency. Therefore, the resin composition of the present invention is suitable for molding and processing (fabrication) such as blow molding in which a recycled resin is utilized. Moreover, the resin composition is useful for an application in which water resistance (hydrolysis resistance) is required, particularly useful as a molding material for an automotive boot (or trunk).

### DETAILED DESCRIPTION OF THE INVENTION

### [Polyester-series resin composition]

The polyester-series resin composition of the present invention comprises (A) a specific polyester block copolymer, and (B) a polyepoxy compound and/or (C) a polycarbodiimide compound.

### (A) Polyester block copolymer

The polyester block copolymer (A) comprises a block copolymer obtainable (or obtained) by a reaction of (a1) a crystalline aromatic polyester and (a2) a lactone in the presence of at least (a4) an acidic phosphate ester. Such a polyester block copolymer (A) at least comprises a block containing the crystalline aromatic polyester (a1) (hard segment or hard polyester block), and an aliphatic polyester block containing the lactone (a2) as a monomer component (soft segment or soft polyester block). Incidentally, usually, such a polyester block copolymer is sometimes referred to as a polyester-series elastomer.

Incidentally, the above-mentioned reaction may be carried out in the presence of the acidic phosphate ester (a4) alone, and is usually carried out in the presence of the acidic phosphate ester (a4) and (a5) a tin compound in many cases. Moreover, the polyester block copolymer (A) may be a block copolymer which is obtainable by a reaction of the crystalline aromatic polyester (a1), the lactone (a2) and further at least one compound (polyfunctional compound) (a3) selected from the group consisting of a polycarboxylic acid, a polyol and ester-formable derivatives thereof.

### (a1) Crystalline aromatic polyester

As the crystalline aromatic polyester constituting the hard polyester block, for example, there may be mentioned a homopolyester or copolyester which is obtainable by polycondensation of a dicarboxylic acid component containing an aromatic dicarboxylic acid as an essential component and a diol component (e.g., an aliphatic diol, an aromatic diol and/or an alicyclic diol). Moreover, the crystalline aromatic polyester may be used in combination with the aromatic dicarboxylic acid, and, if necessary, other monomer component(s), for example, other dicarboxylic acid (e. g. , an aliphatic dicarboxylic acid, and an alicyclic dicarboxylic acid), a hydroxycarboxylic acid, a lactone and others. Incidentally, the crystalline aromatic polyester may have a hydroxyl group in a molecular end thereof.

Among the dicarboxylic acid components, the aromatic dicarboxylic acid may include, for example, an aromatic dicarboxylic acid having about 8 to 20 carbon atoms such as terephthalic acid, isophthalic acid, phthalic acid; an alkyl-substituted phthalic acid such as methylterephthalic acid; a naphthalenedicarboxylic acid such as 2,6-naphthalenedicarboxylic acid; a diphenyldicarboxylic acid such as 4,4'-diphenyldicarboxylic acid; a diphenoxyalkanedicarboxylic acid such as 4,4'-diphenoxyethanedicarboxylic acid; a diphenyletherdicarboxylic acid such as diphenylether-4,4'-dicarboxylic acid; a diphenylalkanedicarboxylic acid such as diphenylmethanedicarboxylic acid; or diphenylketonedicarboxylic acid (preferably an aromatic dicarboxylic acid having about 8 to 16 carbon atoms). Incidentally, the aromatic dicarboxylic acid may also include an ester-formable derivative, for example, a C₁₋₄alkyl ester such as a dimethyl ester, an acid anhydride, an acid halide such as an acid chloride, and others. These aromatic dicarboxylic acids may be used singly or in combination. Among these aromatic dicarboxylic acids, terephthalic acid is often used in view of crystallinity.

As the dicarboxylic acid component, the aromatic dicarboxylic acid may be used in combination with other dicarboxylic acid. Among these other dicarboxylic acids, as the aliphatic dicarboxylic acid, for example, there may be mentioned an aliphatic dicarboxylic acid having about 2 to 40 carbon atoms, such as oxalic acid, succinic acid, glutaric acid, adipic acid, azelaic acid, sebacic acid, dodecanedioic acid, hexadecanedicarboxylic acid or dimer acid (preferably an aliphatic dicarboxylic acid having about 2 to 20 carbon atoms). The alicyclic dicarboxylic acid may include, for example, an alicyclic dicarboxylic acid having about 8 to 12 carbon atoms, such as 1,4-cyclohexanedicarboxylic acid, hexahydrophthalic acid, hexahydroisophthalic acid, hexahydroterephthalic acid or himic acid. Incidentally, these dicarboxylic acids may be an ester-formable derivative, for example, a C₁₋₄alkylester such as a dimethyl ester, an acid anhydride, an acid halide such as an acid chloride, and others. These other carboxylic acids may be used singly or in combination.

Among the diol components, the aliphatic diol may include, for example, an aliphatic C₂₋₁₂diol, e.g., a (poly)C₂₋₄alkylene glycol such as ethylene glycol, propylene glycol, trimethylene glycol, 1,4-butanediol, 1,3-butanediol, 1,2-butanediol, 1,5-pentanediol, 3-methyl-1,5-pentanediol, neopentyl glycol, 1,6-hexanediol, 1,9-nonanediol, a polymethylene glycol, diethylene glycol or dipropylene glycol. These aliphatic diols may be used singly or in combination.

Moreover, the aromatic diol may include an aromatic C₆₋₂₀diol, for example, resorcinol, hydroquinone, naphthalenediol, 2,2-bis(4-hydroxyphenyl)propane, a bisphenol such as bisphenol A, F or AD, and an adduct of a bisphenol and a C₂₋₄alkylene oxide (e.g., 2,2-bis(4-hydroxyethoxyphenyl)propane, 2,2-bis(4-hydroxydiethoxyphenyl)propane, 2,2-bis(4-hydroxytriethoxyphenyl)propane, and 2,2-bis(4-hydroxypolyethoxyphenyl)propane). Moreover, the alicyclic diol may include an alicyclic C₆₋₂₀diol, for example, 1,4-cyclohexanediol, 1,4-cyclohexanedimethanol, a hydrogenated bisphenol such as 2,2-bis(4-hydroxyethoxycyclohexyl)propane, and an adduct of such a diol and a C₂₋₄alkylene oxide.

These diol components may be used singly or in combination. Among the diol components, particularly, at least the aliphatic diol is used in many cases. The aliphatic diol may be used in combination with the aromatic diol and/or the alicyclic diol. Among the aliphatic diols, for example, an aliphatic C₂₋₈diol such as ethylene glycol, propylene glycol, 1,4-butanediol or 1,3-butanediol is preferred.

The hydroxycarboxylic acid may include, for example, an aliphatic C₂₋₆hydroxycarboxylic acid such as glycolic acid, lactic acid, hydroxypropionic acid, hydroxybutyric acid, glyceric acid or tartronic acid; and an aromatic hydroxycarboxylic acid such as hydroxybenzoic acid or hydroxynaphthoic acid. These hydroxycarboxylic acids may be used singly or in combination.

The lactone may include, for example, a C₃₋₁₂lactone such as a propiolactone (e.g., β-propiolactone), a butyrolactone, a valerolactone (e.g., δ-valerolactone, and a methylated (δ-valerolactone)), or a caprolactone [e.g., ε-caprolactone, and a methylated caprolactone such as 2-methyl-ε-caprolactone, 4-methyl-ε-caprolactone or 4,4'-dimethyl-ε-caprolactone (e.g., a methylated ε-caprolactone)]. These lactones may be used singly or in combination.

In the copolyester, in addition to the aromatic dicarboxylic acid and the aliphatic diol, the following component (s) is used in practical cases: a polyC₂₋₄alkylene glycol having a repeating oxyalkylene unit of about 2 to 4 [e.g., a glycol containing a poly(oxy-C₂₋₄alkylene) unit, such as diethylene glycol], the alicyclic diol (e.g., an alicyclic C₆₋₂₀diol such as cyclohexanedimethanol), the aromatic diol, the aliphatic dicarboxylic acid (e.g., an aliphatic dicarboxylic acid having about 6 to 12 carbon atoms, such as adipic acid, pimelic acid or sebacic acid), the alicyclic dicarboxylic acid, and others.

As the crystalline aromatic polyester, for example, it is preferred to use a polyalkylene arylate [e.g., a polyC₂₋₄alkylene arylate such as a polyethylene terephthalate, a polybutylene terephthalate, a polyethylene naphthalate or a polybutylene naphthalate; and a polyC₂₋₄alkylene arylate which is modified or copolymerized with a copolymerizable component (e.g., isophthalic acid) such as a modified polyC₂₋₄alkylene arylate such as a C₂₋₄alkylene arylate copolyester], and others. Incidentally, from the viewpoint of crystallinity, heat resistance or cost of raw materials, the crystalline aromatic polyester preferably contains an alkylene arylate unit (e.g., butylene terephthalate unit and ethylene terephthalate unit) in a proportion of not less than 60 mol% (for example, about 60 to 100 mol%, preferably about 70 to 100 mol%).

Incidentally, it is preferred that the crystalline aromatic polyester constituting the hard polyester block has a high polymerization degree. The melting point of the crystalline aromatic polyester constituting the hard polyester block is not lower than 160°C (e.g., about 160 to 250°C), preferably about 180 to 230°C, and more preferably about 190 to 220°C. Moreover, the number average molecular weight of the crystalline aromatic polyester is, in terms of moldability, not less than 5,000 (e.g., about 5,000 to 1,000,000), preferably about 10,000 to 500,000, and more preferably about 15,000 to 30,000.

### (a2) Lactone

The soft polyester block may be constituted by an aliphatic polyester (a homopolyester or a copolyester) which is obtained by ring-opening polymerization of a lactone. The lactone may include lactones exemplified in the paragraph of the hard polyester block (e.g., a C₄₋₁₀lactone). In particular, it is preferred to use a caprolactone, among others, ε-caprolactone in view of cost. For the ring-opening polymerization of the lactone, if necessary, a conventional initiator (for example, a bifunctional or trifunctional initiator, e.g., an active hydrogen-containing compound such as an alcohol) may be used.

Moreover, in the aliphatic polyester constituting the soft polyester block, if necessary, a polyC₂₋₄alkylene glycol having a repeating oxyalkylene unit of about 2 to 4 (e.g., a polyC₂₋₄alkylene glycol such as diethylene glycol), an aliphatic dicarboxylic acid having about 6 to 12 carbon atoms (e.g., adipic acid, pimelic acid, and sebacic acid), a hydroxycarboxylic acid (e.g., hydroxycarboxylic acids exemplified in the paragraph of the hard polyester block), and others may be used as copolymerizable component(s) in combination with the lactone. The preferred aliphatic polyester include, for example, a lactone homopolymer or copolymer derived from at least one member selected from the above-mentioned lactones, particularly, a polyC₄₋₈lactone such as a poly(ε-caprolactone).

The proportion (weight ratio) of the aromatic crystalline polyester (a1) relative to the monomer (a2) constituting the soft polyester block (e.g., a lactone) [(a1)/(a2)] is about 30/70 to 97/3, preferably about 40/60 to 95/5, and more preferably about 55/45 to 90/10.

### (a3) Polyfunctional compound

Use of the compound (a3) in the polyester preparation can further improve the strain hardening property of the obtained resin composition, and is easy to uniform a thickness of a molded article even in the case of conducting molding (e.g., blow molding). As the compound (a3), there may be used, for example, dicarboxylic acids or ester-formable derivatives thereof and diols or ester-formable derivatives thereof which are exemplified in the paragraph of the hard polyester block (for example, an ester-formable derivative, e.g., a C₁₋₄alkyl ester, an acid anhydride and an acid halide), and usually may be used a compound in which the total of a carboxyl group and a hydroxyl group is not less than three per one molecule (e.g., three to five per one molecule) (a polycarboxylic acid and a polyol (including a hydroxypolycarboxylic acid, a polyhydroxycarboxylic acid, and others)), or an ester-formable derivative of such a compound.

The polycarboxylic acid may include an aliphatic polycarboxylic acid (for example, an aliphatic C₅₋₁₀tri- or tetracarboxylic acid such as butanetetracarboxylic acid; an aliphatic C₄₋₁₀hydroxydi- to tetracarboxylic acid such as glyceric acid, tartronic acid, malic acid, tartaric acid or citric acid); an alicyclic polycarboxylic acid (e.g., an alicyclic C₇₋₁₄tri- or tetracarboxylic acid such as cyclohexanetricarboxylic acid); an aromatic polycarboxylic acid (e.g., an aromatic C₉₋₁₄tri- or tetracarboxylic acid such as trimesic acid, trimellitic acid, 1,2,3-benzenetricarboxylic acid, pyromellitic acid or 1,4,5,8-naphthalenetetracarboxylic acid; and an aromatic C₈₋₁₄hydroxydi- to tetracarboxylic acid such as 4-hydroxyisophthalic acid or 3-hydroxyisophthalic acid); and others.

As the polyol, there may be used an aliphatic polyol (for example, an aliphatic C₃₋₁₀tri- or tetraol such as glycerin, trimethylolethane, trimethylolpropane (TMP) or pentaerythritol; and an aliphatic C₄₋₁₀dihydroxycarboxylic acid such as dimethylolpropionic acid or dimethylolbutanoic acid), an alicyclic polyol (for example, an alicyclic C₅₋₁₀tri- or tetraol such as trihydroxycyclohexane), an aromatic polyol (for example, an aromatic C₆₋₁₀tri- or tetraol such as 1,3,5-trihydroxybenzene; and an aromatic C₇₋₁₄dihydroxycarboxylic acid such as 2,3-dihydroxybenzoic acid, 2,4-dihydroxybenzoic acid, 2,5-dihydroxybenzoic acid, 2,6-dihydroxybenzoic acid, protocatechuic acid or 2,4-dihydroxyphenylacetic acid), and others.

These compounds (a3) may be used singly or in combination. Among the polyfunctional compounds (a3), the aliphatic compound (e.g., an aliphatic polycarboxylic acid, an aliphatic polyol, or an ester-formable derivative thereof), an aromatic compound (e.g., an aromatic polycarboxylic acid, an aromatic polyol, or an ester-formable derivative thereof), and others are preferred. In particular, the aliphatic polycarboxylic acid or an ester-formable derivative thereof, and others are preferred.

The proportion of the polyfunctional compound (a3) relative to 100 parts by weight of the total amount of the crystalline aromatic polyester (a1) and the lactone (a2) is about 0.0005 to 2 parts by weight, preferably about 0.0007 to 1 part by weight, and more preferably about 0.001 to 0.5 part by weight (e.g., about 0.001 to 0.05 part by weight). In the case where the proportion of the compound (a3) is too large, transesterification reaction tends to occur easily, and the melting point of the composition tends to lower easily. Thereby, there is a possibility of insufficient improvement effect of heat resistance or a possibility of gelation.

### (a4) Acidic phosphate ester

It is sufficient that the acidic phosphate ester (a4) has at least one acidic free hydroxyl group bound to a phosphorus atom in a molecule thereof. The acidic phosphate ester may include an ester of an orthophosphoric acid and/or a polyorthophosphoric acid (e.g., a di- to hexaorthophosphoric acid) and an alcohol (e.g., a monool and/or a polyol), and usually, an ester of an orthophosphoric acid is often used.

The acidic phosphate ester may be a monoester, or a polyester such as a diester or a triester. Moreover, the acidic phosphate ester may have a plurality of orthophosphoric acid units per one molecule thereof.

Among the alcohols, the monool may include a C₁₋₂₀aliphatic monool such as methanol, ethanol, t-butanol, nonanol, decanol or stearyl alcohol; a C₄₋₁₀alicyclic monool such as cyclohexanol; a C₆₋₁₄aromatic monool such as phenol or benzyl alcohol; and others. The polyol may include a C₂₋₁₀aliphatic polyol such as ethylene glycol, propylene glycol, glycerin, trimethylolpropane or pentaerythritol; a C₄₋₁₀alicyclic polyol such as cyclohexanedimethanol; a C₆₋₁₄aromatic polyol such as hydroquinone; and others. These polyols may be a diol, a triol or a tetraol, and the like. These alcohols may be used singly or in combination to form an ester with an orthophosphorous acid. Among the alcohols, an aliphatic mono- or polyol is preferred.

Concrete examples of these acidic phosphate esters includes a monoalkyl phosphate such as methyl acid phosphate, butyl acid phosphate, monobutyl phosphate, 2-ethylhexyl acid phosphate, isodecyl acid phosphate or monoisodecyl phosphate (e.g., a monoC₁₋₁₀alkyl phosphate); a dialkyl phosphate such as dibutyl phosphate or bis(2-ethylhexyl) phosphate (e.g., a diC₁₋₁₀alkyl phosphate); a mono- or diC₆₋₁₀aryl phosphate such as mono- or diphenyl phosphate; an alkylenebis(phosphate) such as ethylenebis(phosphate) (e.g., a C₂₋₁₀alkylenebis(phosphate)); a C₆₋₁₄arylene diphosphate such as phenylene diphosphate or biphenylene diphosphate; a C₆₋₁₀arylenebis(C₁₋₆alkyl phosphate) such as xylylene diphosphate; a C₁₋₄alkylenebis((C₁₋₆alkyl-C₆₋₁₀aryl) phosphate) such as 2,2-methylenebis((4,6-di-t-butylphenyl) phosphate); and others. These acidic phosphate esters may be used singly or in combination.

Among the acidic phosphate esters, a mono- or dialkyl phosphate (e.g., a monoC₁₋₆alkyl phosphate) and others are preferred.

The proportion of the acidic phosphate ester relative to 100 parts by weight of the total amount of the crystalline aromatic polyester (a1) and the lactone (a2) is about 0.0001 to 0.05 part by weight, preferably about 0.0001 to 0.03 part by weight (e.g., about 0.0002 to 0.02 part by weight), and more preferably about 0.0005 to 0.01 part by weight. Too small proportion of the acidic phosphate ester sometimes fails to significantly improve thermal cycling resistance due to insufficient inhibition of transesterification. Moreover, in the case of too large proportion of the acidic phosphate ester, there is a possibility of lowing hydrolysis resistance and there is a possibility of lowing mixing effects of the epoxy compound or the polycarbodiimide compound.

### (a5) Tin compound

The tin compound may include a tin halide (e.g., stannous fluoride, stannous chloride, stannous bromide, and stannous iodide), a tin salt of a carboxylic acid [for example, a tin salt of a C₂₋₂₀carboxylic acid or a partial ester thereof (e.g., a C₁₋₆alkyl ester), e.g., tin acetate, tin tetraacetate, tin 2-ethylhexanoate, tin dioctanate, tin stearate, tin laurate, and dibutyltin laurate], an alkyltin oxide (e.g., a mono- or diC₁₋₆alkyltin oxide such as dibutyltin oxide), an acyltin compound (e.g., a stannous diC₂₋₆acylate such as stannous diacetate; and a stannic tetraC₂₋₆acylate such as stannic tetraacetate), and others. The tin compounds may be used singly or in combination. It is sufficient that the tin compound has at least one tin atom in a molecule thereof. The tin compound may have not less than two of tin atoms. Incidentally, in a reaction of the crystalline aromatic polyester and the lactone, the tin compound acts as a catalyst.

Among the tin compounds , the preferred one includes a tin halide, a tin salt of a carboxylic acid (for example, a tin salt of a C₂₋₁₆carboxylic acid or a partial ester thereof (e.g., a tin salt of a C₁₋₄alkyl ester of a C₂₋₁₆carboxylic acid), an alkyltin oxide (e.g., a mono- or diC₁₋₄alkyl-tin oxide), and others. The proportion of the tin compound (a5) relative to 100 parts by weight of the total amount of the crystalline aromatic polyester (a1) and the lactone (a2) is, for example, about 0.1 to 15 parts by weight (e.g., about 0.5 to 10 parts by weight), preferably about 1 to 10 parts by weight, and more preferably about 1.5 to 7 parts by weight (e.g., about 2 to 5 parts by weight). Moreover, the proportion of the tin compound (a5) relative to 1 part by weight of the acidic phosphate ester (a4) may be, for example, about 1 to 20 parts by weight, preferably about 1.5 to 15 parts by weight, and more preferably about 2 to 10 parts by weight. Incidentally, in the case of too small proportion of the tin compound, there is a possibility lowering the reaction efficiency due to decrease of the rate of polymerization. In the case of too large proportion of the tin compound, there is a possibility of lowing hydrolysis resistance and there is a possibility of remarkably lowing mixing effects of the epoxy compound or the polycarbodiimide compound.

The reaction of the crystalline aromatic polyester (a1) and the lactone (a2), and if necessary the compound (a3) may be carried out by mixing (or kneading) these components, and in addition, the acidic phosphate ester (a4) and the tin compound (a5), with a conventional manner. The kneading operation may be carried out by using a conventional kneading machine (e.g., a monoaxial or biaxial screw extruder, a kneader, and a calender roll). Moreover, in advance of kneading, each component may be preliminarily converted into a powder form by a machine such as a freeze grinder or may be preliminarily kneaded by a mixer (e.g., a tumbler, a V-shaped blender, a Henschel mixer, a nauta mixer, a ribbon mixer, a mechanochemical apparatus, an extrusion blender, and a ball mill), and others.

The reaction temperature may be, for example, about 100 to 250°C, preferably about 120 to 230°C, and more preferably about 130 to 210°C. The reaction may be carried out in the air or under an atmosphere or flow of an inactive gas (e.g., helium gas, nitrogen gas, and argon gas). The reaction may be, if necessary, conducted under an applied pressure or a reduced pressure, or under an atmospheric pressure.

Incidentally, the reaction may use, if necessary, a conventional catalyst to be used for the ring-opening polymerization of the lactone (for example, a catalyst other than the tin compound, e.g., an aluminum catalyst, and a titanium catalyst) and/or an initiator (e.g., a compound having an active hydrogen atom, such as a polyol).

The polyester block copolymer (A) may have a urethane bond, an amide bond and other bond(s), in addition to an ester bond. The polyester block copolymer (A) has a hydroxyl group in a molecular end thereof.

### (B) Polyepoxy compound

The polyepoxy compound (B) is not particularly limited to a specific one as far as the compound has not less than two epoxy groups per one molecule. The polyepoxy compound (B) may be a monomeric epoxy compound, or an oligomeric or polymeric epoxy compound (e.g., an epoxy resin).

Such a polyepoxy compound may include a glycidyl ether-series epoxy compound [for example, a glycidyl ether obtained by a reaction of a polyhydroxy compound (e.g., a bisphenol, a polyhydric phenol, an alicyclic polyhydric alcohol, and an aliphatic polyhydric alcohol) and epichlorohydrin (for example, a (poly)C₂₋₄alkylene glycol diglycidyl ether such as ethylene glycol diglycidyl ether, diethylene glycol diglycidyl ether or a polyethylene glycol diglycidyl ether; a diglycidyl ether of a polyhydric phenol such as resorcin or hydroquinone; a diglycidyl ether of an alicyclic polyhydric alcohol such as cyclohexanediol, cyclohexanedimethanol or a hydrogenated bisphenol; a diglycidyl ether of a bisphenol (e.g., a bis(hydroxyphenyl)alkane such as 4,4'-dihydroxybiphenyl or bisphenol A) or a C₂₋₃alkylene oxide adduct thereof), and a novolak-series (or novolak-type) epoxy resin (e.g., a phenol-novolak-series or cresol-novolak-series epoxy resin)]; a glycidyl ester-series epoxy compound; an alicyclic epoxy compound (or a cyclic aliphatic epoxy resin); a heterocyclic epoxy resin (e.g., triglycidyl isocyanurate (TGIC), and a hydantoin-series (or hydantoin-type) epoxy resin); a glycidyl amine-series (glycidyl amine-type) epoxy compound [for example, a reaction product of an amine and epichlorohydrin, e.g., an N-glycidyl aromatic amine {e.g., tetraglycidyldiaminodiphenylmethane (TGDDM), triglycidylaminophenol (e.g., TGPAP, and TGMAP), diglycidylaniline (DGA), diglycidyltoluidine (DGT), and tetraglycidylxylylenediamine (e.g., TGMXA)}, and an N-glycidyl alicyclic amine (e.g., tetraglycidylbisaminocyclohexane)]; and others.

These polyepoxy compounds may be used singly or in combination. Among these epoxy compounds, from the viewpoint of heat history of resin due to blending and/or molding and processing (fabrication), the preferred one includes an alicyclic epoxy compound, a glycidyl ester-series epoxy compound, and others.

The alicyclic epoxy compound may include, for example, a compound having an epoxycycloalkane skeleton such as 1,2-epoxycyclohexane skeleton (e.g., a 1,2-epoxyC₅₋₈cycloalkane skeleton). Such an alicyclic epoxy compound may include a compound in which a plurality of epoxycycloalkane skeletons are connected through ester bonds; a compound in which a plurality of epoxycycloalkane skeletons are connected through heterocycles (for example, a compound in which two epoxycycloalkanes are connected through a cyclic acetal, such as an alicyclic diepoxyacetal); an epoxycycloalkane having an epoxyalkyl group (e.g., an epoxyC₂₋₄alkyl-epoxyC₅₋₈cycloalkane such as vinylcyclohexane dioxide); and others. The compound in which a plurality of epoxycycloalkane skeletons are connected through ester bonds may include, for example, an ester of an alcohol having an epoxycycloalkane skeleton (such as 3,4-epoxycyclohexylmethyl-3',4'-epoxycyclohexanecarboxylate) or a lactone adduct thereof (e.g., a lactone such as ε-caprolactone, or a lactone polymer (e.g., a dimer to tetramer) and a carboxylic acid having an epoxycycloalkane skeleton; and a diester of a dicarboxylic acid (such as an alicyclic diepoxyadipate (e.g., bis(3,4-epoxycyclohexyl)adipate)) or a lactone adduct thereof (e.g., a lactone such as ε-caprolactone, or a lactone polymer (e.g., a dimer to a tetramer)) and the above-mentioned alcohol having an epoxycycloalkane skeleton. The alcohol having an epoxycycloalkane skeleton may include, for example, an epoxycycloalkanol such as 1,2-epoxy-4-hydroxycyclohexane; and an epoxycycloalkylC₁₋₄alkanol such as 1,2-epoxy-4-hydroxymethylcyclohexane. The carboxylic acid having an epoxycycloalkane skeleton may include, for example, an epoxycycloalkanecarboxylic acid such as 1,2-epoxy-4-carboxycyclohexane; and an epoxycycloalkylC₁₋₄alkane-carboxylic acid such as 1,2-epoxy-4-carboxymethylcyclohexane. The dicarboxylic acid may include, for example, an aliphatic dicarboxylic acid such as adipic acid, an aromatic dicarboxylic acid such as terephthalic acid, and an alicyclic dicarboxylic acid such as hexahydroterephthalic acid.

Incidentally, these epoxy compounds may be obtained by using a compound having an epoxy group (e.g., an alcohol and/or a carboxylic acid) as a raw material in a reaction such as esterification or acetalization, or may be obtained by subjecting a raw material free from an epoxy group to a reaction such as esterification or acetalization and then epoxidizing the resulting product. For example, an ester of an alcohol having an epoxycycloalkane skeleton (such as 3,4-epoxycyclohexylmethyl-3',4'-epoxycyclohexanecarboxylate) or a lactone adduct thereof (e.g., a lactone such as ε-caprolactone, or a lactone polymer) and a carboxylic acid having an epoxycycloalkane skeleton may be obtained by epoxydizing a carbon-carbon unsaturated bond in an ester of a cycloalkenecarboxylic acid (e.g., tetrahydrophthalic acid anhydride) and a cycloalkenylalkanol (e.g., tetrahydrobenzyl alcohol), or a lactone adduct thereof. For example, such an epoxy compound is commercially available as a trade name "EPOLEAD GT300", a trade name "EPOLEAD GT400", a trade name "CELLOXIDE 2081" (a monomer adduct), a trade name "CELLOXIDE 2083" (a trimer adduct) and a trade name "CELLOXIDE 2085" (a pentamer adduct) from Daicel Chemical Industries, Ltd.

The glycidyl ester-series epoxy compound may include, for example, a polyglycidyl ester of an aromatic polycarboxylic acid; a polyglycidyl ester of an alicyclic polycarboxylic acid; a polyglycidyl ester of an ester of the aromatic polycarboxylic acid and/or alicyclic polycarboxylic acid and a polyol (an ester-series polycarboxylic acid having carboxyl groups in at least two ends thereof); a diglycidyl ester of dimer acid, or amodified product thereof; and others.

The polyglycidyl ester of the aromatic polycarboxylic acid (e.g., a di- to tetraglycidyl ester) may include a polyglycidyl ester of an aromatic C₈₋₁₆di-to tetracarboxylic acid such as phthalic acid, isophthalic acid, terephthalic acid, naphthalenedicarboxylic acid, trimellitic acid or pyromellitic acid (e.g., a diglycidyl ester of a dicarboxylic acid such as diglycidyl phthalate or diglycidyl terephthalate; and a di- or triglycidyl ester of a tricarboxylic acid such as di- or triglycidyl trimellitate). The polyglycidyl ester of the alicyclic polycarboxylic acid may include a polyglycidyl ester of an alicyclic di- to tetraC₅₋₁₀carboxylic acid such as tetrahydrophthalic acid, methyltetrahydrophthalic acid or dimethylhexahydrophthalic acid (e.g., a polyglycidyl ester of an alicyclic di- or triC₅₋₈carboxylic acid such as diglycidyl methyltetrahydrophthalate or diglycidyl hexahydrophthalate), and others. The diglycidyl ester of dimer acid, and a modified product thereof are commercially available as trade names "EPIKOTE 871", "EPIKOTE 872", and others from Japan Epoxy Resins Co., Ltd.

In the polyglycidyl ester of the ester-series polycarboxylic acid having carboxyl groups in at least two ends thereof, the ester-series polycarboxylic acid may include an ester of the above-exemplified aromatic polycarboxylic acid and/or alicyclic polycarboxylic acid and a polyol (for example, an aliphatic polyol, e.g., a mono- to tetraC₂₋₆alkylene glycol such as ethylene glycol, propylene glycol or diethylene glycol; a C₃₋₆alkanetriol such as glycerin, trimethylolethane or trimethylolpropane; and a C₃₋₁₀alkanetetraol such as pentaerythritol); and others. In the ester-series polycarboxylic acid, the number of repetitions of the ester unit (the repeating number of ester units) is, for example, about 1 to 10, and preferably about 1 to 5.

Among these polyepoxy compounds, particularly, there may be mentioned, for example, an ester of an epoxycycloalkylC₁₋₄alkanol and an epoxycycloalkanecarboxylic acid (e.g., an alicyclic diepoxycarboxylate), and a compound represented by the following formula (I). 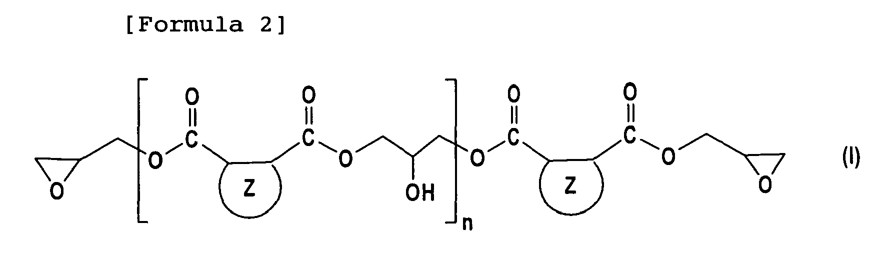 In the formula (I), Z represents a cyclohexane ring or benzene ring which may have an alkyl group such as methyl group (e.g., a C₁₋₄alkyl group) as a substituent, and "n" denotes an integer of 0 to 5.
The number of substituents in the ring Z is not particularly limited to a specific one, and for example, may be about 1 to 4 and preferably about 1 or 2. Moreover, the number "n" which represents the number of ester units may be preferably an integer of 0 to 3, and more preferably 1 or 2. Incidentally, a compound represented by the formula (I) in which n=0 and the ring Z is cyclohexane ring corresponds to diglycidyl hexahydrophthalate, and a compound represented by the formula (I) in which n=0 and the ring Z is benzene ring corresponds to diglycidyl phthalate.

### (C) Polycarbodiimide compound

The structure of the polycarbodiimide compound (C) is not particularly limited to a specific one as far as the polycarbodiimide compound has not less than two carbodiimide groups per one molecule. The polycarbodiimide compound (C) may be a monomeric polycarbodiimide compound (e.g., an aromatic polycarbodiimide compound, and an alicyclic polycarbodiimide compound), and usually, is an oligomeric (dimeric or more oligomeric) or polymeric polycarbodiimide compound in many cases. The polycarbodiimide compounds may be used singly or in combination.

The oligomeric or polymeric polycarbodiimide compound may include, for example, a compound having a constituent unit (repeating unit) represented by the following formula (II). 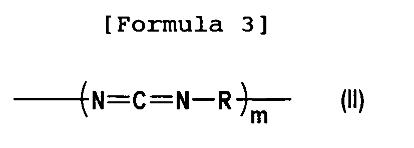 In the formula (II), R represents a bivalent hydrocarbon group which may have a substituent, and "m" denotes an integer of not less than 2.
In the above formula (II), the bivalent group R may include, for example, an aliphatic hydrocarbon group [for example, an alkylene group or alkylidene group (e.g., a C₁₋₃₀alkylene group such as methylene group, ethylene group, tetramethylene group or hexamethylene group (e.g., a C₁₋₂₀alkylene group)]; an alicyclic hydrocarbon group [for example, a cycloalkylene group (e.g., a C₄₋₁₀cycloalkylene group such as cyclohexylene group, preferably a C₅₋₈cycloalkylene group), a cycloalkenylene group (e.g., a C₅₋₁₀cycloalkenylene group such as cyclohexenylene group), a bivalent group corresponding to an alkylcycloalkane (e. g. , methylcyclohexane) (for example, a C₁₋₁₀alkylene-C₄₋₁₀cycloalkylene group such as methylene-cyclohexylene group, preferably a C₁₋₆alkylene-C₅₋₈cycloalkylene group), a bivalent group corresponding to a dicycloalkylalkane (for example, a diC₄₋₁₀cycloalkyl-C₁₋₆alkane-diyl group such as dicyclohexylmethane-4,4'-diyl group, preferably a diC₅₋₈cycloalkyl-C₁₋₄alkane-diyl group)]; an aromatic hydrocarbon group [for example, an arylene group, e.g., a C₆₋₁₄arylene group such as phenylene group or naphthylene group (e.g., preferably a C₆₋₁₀arylene group)]; an araliphatic hydrocarbon group [for example, a bivalent group corresponding to a diarylalkane (e.g., a diC₆₋₁₅aryl-C₁₋₆alkane-diyl group such as diphenylmethane-4,4'-diyl group, preferably a diC₆₋₁₀aryl-C₁₋₄alkane-diyl group), and a bivalent group corresponding to a dialkylarene (e.g., a diC₁₋₆alkyl-C₆₋₁₀arene-diyl group such as α,α'-xylylene group, preferably a diC₁₋₄alkyl-C₆₋₁₀arene-diyl group)]; and others. Moreover, the group R may have a substituent (for example, an alkyl group such as methyl group; and an aryl group such as phenyl group).

In the above-mentioned formula (II), the group R may be the same for every repeating unit, or may be different for every repeating unit. That is, the polycarbodiimide compound may be a homopolymer, or a copolymer obtained from different monomers (e.g., a polyisocyanate compound) as a raw material.

In the above-mentioned formula (II), it is sufficient that the number "m" of repetitions of unit (the repeating number of units) is not less than 2 (e.g., about 2 to 100), and the number may be, for example, about 3 to 50, preferably about 4 to 40, and more preferably about 5 to 30 (e.g., about 8 to 20). Incidentally, the structure of the polycarbodiimide may be a chain structure (a straight chain, a branched chain) or a network (mesh) structure, and usually may be a chain structure.

The representative polycarbodiimide may include, for example, an aliphatic polycarbodiimide, an alicyclic polycarbodiimide, and an aromatic polycarbodiimide. The aliphatic polycarbodiimide may include, for example, a polyalkylenecarbodiimide such as a polyhexamethylenecarbodiimide or a poly(3-methylhexamethylenecarbodiimide) (e.g., a poly(C₂₋₁₀alkylenecarbodiimide)).

As the alicyclic polycarbodiimide, for example, there may be mentioned a polydicycloalkylalkanecarbodiimide such as a poly(4,4'-dicyclohexylmethanecarbodiimide) (e.g., a poly(diC₅₋₆cycloalkyl-C₁₋₄alkanecarbodiimide)).

The aromatic polycarbodiimide may include, for example, a polyarylenecarbodiimide [e.g., a poly(C₆₋₁₀arylenecarbodiimide) such as a poly(m-phenylenecarbodiimide), a poly(p-phenylenecarbodiimide), a polytolylenecarbodiimide, a poly(diisopropylphenylenecarbodiimide), a poly(methyldiisopropylphenylenecarbodiimide) or a poly(triisopropylphenylenecarbodiimide)], and a polydiarylalkanecarbodiimide [e.g., a poly(diC₆₋₁₀aryl-C₁₋₄alkanecarbodiimide) such as a poly(4,4'-diphenylmethanecarbodiimide)].

As such a polycarbodiimide compound, a commercial item may be used, or a synthesized product obtained from an organic polyisocyanate (e.g., an organic diisocyanate) or others by a conventional synthesis method may be used. The polycarbodiimide compound may be obtained, for example, by subjecting an organic polyisocyanate (particularly, an organic diisocyanate) or a polymer thereof (e.g., a dimer, and a trimer) to a reaction (decarboxylation). Incidentally, the reaction of the organic polyisocyanate may be carried out in the absence of any catalyst, or may be carried out in the presence of a carbodiimide-producing catalyst [for example, a phosphorus-containing catalyst such as phosphorin, phosphoridine, phosphorin oxide (e.g., 1-methyl-1-oxophosphorin, 1-ethyl-3-methyl-3-phosphorin-1-oxide, and 3-methyl-1-phenyl-2-phosphorin-1-oxide) or phosphorin sulfide, and a metal carbonyl]. Incidentally, in the above-mentioned reaction, if necessary, an organic monoisocyanate may be used in combination.

As the above-mentioned organic polyisocyanate, there may be mentioned a compound corresponding to the polycarbodiimide compound. For example, the often used organic polyisocyanate includes an aromatic polyisocyanate [for example, a C₆₋₁₀arenediisocyanate which may have a substituent such as a C₁₋₄alkyl group in an arene ring thereof (e.g., 2,4,5-triisopropylphenylene-1,3-diisocyanate, 1,3,5-triisopropylphenylene-2,4-diisocyanate, 1,3-diisopropylphenylene-2,4-diisocyanate, tolylene-2,4-diisocyanate, and tolylene-2,6-diisocyanate), and a C₆₋₁₀arenediC₁₋₄alkylene-diisocyanate which may have a substituent such as a C₁₋₄alkyl group in an arene ring thereof (e.g., tetramethyl-m-xylylenediisocyanate), a bis(C₆₋₁₀arylisocyanate) (e.g., a C₁₋₄alkylenebis(C₆₋₁₀arylisocyanate such as 4,4'-methylenebis(phenylisocyanate))], an aliphatic polyisocyanate (e.g., a C₂₋₁₄alkane-diisocyanate such as 1,6-hexamethylenediisocyanate), an alicyclic polyisocyanate (for example, a hydrogenated product of the aromatic polyisocyanate, e.g., 4,4'-methylenebis(cyclohexylisocyanate), a polymer thereof (e.g., a dimer (uretidione), and a trimer (isocyanurate)). These polyisocyanate compounds may be used singly or in combination.

Moreover, the monoisocyanate compound may include, for example, an alkylisocyanate such as methylisocyanate; a cycloalkylisocyanate such as cyclohexylisocyanate; an arylisocyanate such as phenylisocyanate or tolylisocyanate; and others. These monoisocyanate compounds may be also used singly or in combination.

Incidentally, the reaction of the isocyanate compound may be carried out by a conventional method. For example, such a method may be referred to Japanese Patent No. 16759/1977 (JP-52-16759B), Japanese Patent Application Laid-Open NO. 298890/1994 (JP-6-298890A), Japanese Patent Application Laid-Open No. 165853/1995 (JP-7-165853A) and others.

### (Proportion of each component)

The proportion of the epoxy compound (B) relative to 100 parts by weight of the polyester block copolymer (A) is, for example, about 0.05 to 5 parts by weight, preferably about 0.07 to 3 parts by weight, and more preferably about 0.1 to 2 parts by weight. In the case where the proportion of the epoxy compound (B) is too small, there is a possibility that heat resistance and/or water resistance are/is insufficient. On the other hand, in the case where the proportion of the epoxy compound (B) is too large, a proportion of an unreacted epoxy compound tends to become large, and moldability (processability) and/or properties in appearance (e.g., a surface condition of a molded article) are/is sometimes deteriorated.

The proportion of the polycarbodiimide compound (C) relative to 100 parts by weight of the polyester block copolymer (A) is, for example, about 0.05 to 5 parts by weight, preferably about 0.07 to 3 parts by weight, and more preferably about 0.1 to 2 parts by weight. Too small proportion of the polycarbodiimide compound sometimes brings about insufficient heat resistance and/or water resistance. Even in the case where the proportion of the polycarbodiimide compound is too large, it is difficult to obtain a remarkable addition effect, and there is a tendency that a resin composition or a molded article thereof is stained or a surface condition of a molded article becomes rough.

In the polyester-series resin composition of the present invention, the polyester block copolymer (A) may be reacted with the polyepoxy compound (B) and/or the polycarbodiimide compound (C). Such a resin composition is excellent in hydrolysis resistance with maintaining elasticity and moldability of the polyester block copolymer, and hardly deteriorates (or degenerates) even in the case of being used for such an application as exposed under a high humid atmosphere for a long time. Moreover, the resin composition is excellent in heat resistance, and particularly, is inhibited in lowering of a melting point thereof and has a high thermal cycling resistance even in the case where heat history occurs in mixing (e.g., kneading) and/or molding (processing) step(s). Thus, the resin composition is excellent in recycling efficiency due to an inhibited degradation and a high thermal cycling resistance.

The polyester-series resin composition of the present invention may further contain various additives, for example, a stabilizer (e.g., a heat stabilizer, an antioxidant, an ultraviolet ray absorbing agent, and a weather (light)-resistant stabilizer), a flame retardant (e.g., a phosphorus-containing flame retardants, a nitrogen-containing flame retardants, and a halogen-containing flame retardants), a flame-retardant auxiliary or synergist (e.g., an antimony compound), a dripping inhibitor (e.g., a fluorine-containing resin), a filler (e.g., an inorganic filler such as a glass fiber, a carbon fiber, a talc, a mica or a glass bead; and an organic filler such as an aramid fiber or a crosslinked acrylic resin particle), a mold-release agent (releasing agent), a lubricant, an antistatic agent, a coloring agent (e.g., an inorganic or organic colorant), and others. These additives may be used singly or in combination.

The polyester-series resin composition contains at least the stabilizer (or antioxidant) in many cases. Such a stabilizer (or antioxidant) may include a hindered phenol-series compound [for example, a C₄₋₈alkanetetraol tetrakis[3-(3,5-di-t-butyl-4-hydroxyphenyl)propionate] such as pentaerythritol tetrakis[3-(3,5-di-t-butyl-4-hydroxyphenyl)propionate]], a hindered amine-series compound (for example, a 2,2,6,6-tetraC₁₋₄alkyl-4-piperidyl ester, a 4-C₁₋₁₀alkoxy-2,2,6,6-piperidine, a 4-C₆₋₁₀aryloxy-2,2,6,6-piperidine, a 4-C₆₋₁₀aryl-C₁₋₄alkyl-2,2,6,6-tetramethylpiperidine, and a bis(2,2,6,6-tetramethyl-4- piperidyloxy)C₂₋₆alkane), a sulfur-containing compound, and others.

The proportion of the additive may be suitably selected depending on the species of the additive, the application of the resin composition, and others. Moreover, the mixing of the additive is not particularly limited to a specific timing. The component (or constituent) of the resin composition [e.g., the polyester block copolymer (A), the polyepoxy compound (B) and/or the polycarbodiimide compound (C), or a component constituting these copolymer and compound (e.g., a polyester block)] may contain the additive in advance, or the additive may be added and mixed in the component of the resin composition with mixing the component. Further, the additive may be mixed in the component of the resin composition after mixing the component. For example, in the case of using the stabilizer (e.g., a stabilizer having antioxidant and/or light stabilizing effect(s)), the stabilizer may be blended (or mixed) in the polyester block copolymer or the polyester-series resin composition, or may be blended (or mixed) in the polyester block constituting the block copolymer (e.g., a crystalline aromatic polyester).

The polyester-series resin composition of the present invention may be produced by mixing the polyester block copolymer (A), the polyepoxy compound (B) and/or the polycarbodiimide compound (C), as well as if necessary other component(s) (e.g., the additive). The mixing may be carried out by a conventional method, for example, with the use of a mixer (e.g., a tumbler, a V-shaped blender, a Henschel mixer, a nauta mixer, a ribbon mixer, a mechanochemical apparatus, and an extrusion blender), and usually, is carried out by kneading the above-mentioned components with the use of a conventional kneader (e.g., a monoaxial or biaxial screw extruder, a kneader, and a calender roll) in practical cases. The mixing (in particular, kneading) enables the reaction of the polyester block copolymer (A), the polyepoxy compound (B) and/or the polycarbodiimide compound (C), and ensures improvement in hydrolysis resistance of the resin composition.
Incidentally, in advance of kneading, each component may be preliminarily converted into a powder form by a machine such as a freeze grinder or may be preliminarily mixed by the above-mentioned mixer and others. If necessary, the melted and mixed resin composition may be pelletized with the use of a pelletizing means (e.g., a pelletizing machine) .

Since the resin composition of the present invention is excellent in properties such as elasticity and moldability and can inhibit lowering of a melting point in a resin contained therein even in the case of being repeatedly heat-melted, the resin composition is excellent in thermal cycling resistance. Moreover, the resin composition is useful for forming various resin molded articles because of being excellent in hydrolysis resistance in addition to heat resistance (particularly thermal cycling resistance).

### [Molded article]

The molded article (resin molded article) of the present invention is formed from the polyester-series resin composition. Such a molded article may be produced by molding the resin composition with the use of a conventional molding method, for example, an extrusion molding, injection molding, blow molding, calender molding, press molding, and vacuum molding. Moreover, as mentioned above, the resin composition has a high recycling efficiency from the viewpoint that the resin composition inhibits lowering of a melting point in a resin contained therein even in the case of being repeatedly heat-melted and is excellent in thermal cycling resistance and also excellent in hydrolysis resistance. Therefore, the resin composition is particularly suitable for molding and processing (fabrication) to be subjected to recycling, such as blow molding.

The shape of the molded article is not particularly limited to a specific one, and may be a zero-dimensional shape (e.g., a granular (or particulate) form, and a pellet form), a one-dimensional shape (e.g., a strand form, and a stick (or bar) form), a two-dimensional shape (e.g., a plate form, a sheet form, and a film form), a three-dimensional shape (e.g., a tube form, a corrugated tube form, a bended tube form, a block form), and others.

### INDUSTRIAL APPLICABILITY

The polyester-series resin composition and molded article of the present invention are excellent in properties such as heat resistance (particularly thermal cycling resistance) and hydrolysis resistance, furthermore excellent in recycling efficiency, and therefore, are suitable for various applications, for example, an automotive part [for example, a boot (e.g., a rack and pinion boot, and a constant velocity joint boot), a bush (e.g., a ball joint bush), a McPherson strut cover, a steering rod cover, a door latch striker, a housing for safety belt stopper, a steady rest roll for window, a leaf spring, a jounce bumper, a side trim molding, and a grommet], a part for machinery (e.g., an oil hydraulic hose, a coil tube, a flexible coupling, and a conveyer belt), and an electric or electronic device part (e.g., a gear and hub, and a timing belt). Since the resin composition is particularly suitable for blow molding, the composition is useful for a blow-molded product, for example, a blow-molded product for automobile such as an automotive boot, a McPherson strut cover or a steering rod cover.

### EXAMPLES

Hereinafter, the following examples are intended to describe this invention in further detail and should by no means be interpreted as defining the scope of the invention. Incidentally, the simple term "part(s)" in the examples means the term "part(s) by weight".

In the examples and comparative examples, a melting point, a thermal cycling resistance, a tensile breaking strength, a tensile breaking elongation, a hydrolysis resistance, a MI value, a strain hardening property, and a draw down property were measured based on the following manner.

### (1) Melting point

A melting point (unit: °C) was measured by a differential scanning calorimeter (DSC) in accordance with JIS (Japanese Industrial Standards) K 7121. Incidentally, a melting peak temperature was determined as a melting point.

### (2) Thermal cycling resistance

With the use of a differential scanning calorimeter (DSC), a cycle comprising raising the temperature from 25°C to 250°C and lowering the temperature from 250°C to 25°C was repeated five times. A melting point was measured at the lowering step of the fifth cycle. The melting point was expressed as a percent when a melting point measured at the raising step of the second cycle was defined as 100%.

### (3) Tensile breaking strength and tensile breaking elongation

A tensile breaking strength and a tensile breaking elongation were measured in accordance with JIS K 7113.

### (4) Hydrolysis resistance

A JIS No. 2 dumbbell was subjected to a hydrolysis treatment at 120°C under 100% RH for 100 hours by a pressure cooker, and thereafter a tensile breaking elongation was measured in accordance with JIS K 7121, and expressed as a percent when an elongation before the hydrolysis treatment was defined as 100%.

### (5) MI value

An MI value was measured at 230°C by using a weight (2.160 kg) (unit: g/10min.).

### (6) Strain hardening property

An elongational viscosity (ηE) measurement and a shear viscosity (η⁺) measurement were carried out. A nonlinear parameter was defined as ln(ηE/3η⁺)/ε, and a slope of a straight line by plotting ε and ln(ηE/3η⁺) was calculated as a strain hardening property. Incidentally, the value ε expresses a strain, and the larger the value is, the higher the uniformity of the thickness of a blow-molded product is.

### (7) Draw down property

With the use of a capillograph manufactured by Toyo Seiki Seisaku-sho, Ltd., a capillary having a diameter of 3 mm and length of 10 mm was attached. A resin was extruded at 240°C and an extrusion rate of 20 mm/min, and when the time required for the elongation of the strand to reach 60 mm is taken as 1, the rate of the time required for the elongation of the strand to reach 300 mm was calculated. Incidentally, for blow molding, it is preferred that the rate be not less than 3.

### Production Example 1

As the crystalline aromatic polyester (a1), a commercially available polybutylene terephthalate obtained from terephthalic acid and 1,4-butanediol as monomer components was used, and a commercially available ε-caprolactone as the lactone (a2), butyl acid phosphate ("AP-4", manufactured by Daihachi Chemical Industry Co., Ltd.) as the acidic phosphate ester (a4) and tin 2-ethylhexanoate ("Stanoct", manufactured by API Corporation) as the tin compound (a5) were used.

In a reactor equipped with a stirrer, a thermometer, a condenser and a line for distillation, 60 parts of the polybutylene terephthalate, 40 parts of ε-caprolactone, 0.005 part of AP-4, and 0.01 part of Stanoct were fed and mixed at a reaction temperature of 235°C for one hour for reaction. Then, the reactor inner pressure was reduced from an atmospheric pressure to not higher than 1 torr (about 133 Pa) over one hour with maintaining this temperature, and the reduced pressure was maintained in the condition for another one hour so that the remaining ε-caprolactone in the system was removed. The obtained polyester block copolymer (named as Polyester block copolymer (a1-1)) had a melting point of 205°C.

### Production Example 2

A polyester block copolymer (named as Polyester block copolymer (a1-2)) was produced in the same manner as Production Example 1 except that 0.008 part of pyromellitic anhydride as the polyfunctional compound (a3) was fed in addition to the polybutylene terephthalate, the ε-caprolactone, AP-4 and Stanoct in the reactor. The obtained Polyester block copolymer (a1-2) had a melting point of 206°C.

### Production Example 3

A polyester block copolymer (named as Polyester block copolymer (a1-3)) was produced in the same manner as Production Example 1 except that AP-4 and Stanoct were not added. The obtained Polyester block copolymer (a1-3) had a melting point of 203°C.

### Production Example 4

A polyester block copolymer (named as Polyester block copolymer (a1-4)) was produced in the same manner as Production Example 1 except that 0.5 part of AP-4 and 1 part of Stanoct were fed. The obtained Polyester block copolymer (a1-4) had a melting point of 207°C.

### Production Example 5

A polyester block copolymer (named as Polyester block copolymer (a1-5)) was produced in the same manner as Production Example 2 except that AP-4 and Stanoct were not added. The obtained Polyester block copolymer (a1-5) had a melting point of 204°C.

### Examples 1 to 17 and Comparative Examples 1 to 4

In a mixing ratio shown in Table 1 and Table 2, a polyester block copolymer, a polyepoxy compound and/or a polycarbodiimide compound represented by the Tables, and 0.5 part of pentaerythritol tetrakis[3-(3,5-di-t-butyl-4-hydroxyphenyl)propionate] (manufactured by Ciba-Geigy Ltd., "IRGANOX 1010") was mixed, and the mixture was compounded at a temperature of 260°C by a biaxial screw extruder to prepare a resin composition. The physical properties of the obtained compositions are shown in Table 1 and Table 2.

Incidentally, the polyepoxy compounds and the polycarbodiimide compounds used in Examples and Comparative Examples are shown as follows.

### (B) Polyepoxy compound

(b-1) Trade name: CELLOXIDE 2021P (manufactured by Daicel Chemical Industries, Ltd.)
(b-2) Trade name: EPOMIK R540 (manufactured by Printec Corporation)

### (C) Polycarbodiimide compound

(c-1) Alicyclic polycarbodiimide (trade name: CARBODILITE HMV-8CA, manufactured by Nisshinbo Industries, Inc.)
(c-2) Aromatic polycarbodiimide (trade name: CARBODILITE V-05, manufactured by Nisshinbo Industries, Inc.)
(c-3) Aromatic polycarbodiimide (trade name: Stabaxol P, manufactured by Rhein Chemie Corporation)

### [Table 1]

**Table 1**

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Polyester block copolymer (parts) | | a1-1 100 | a1-1 100 | a1-1 100 | a1-1 100 | a1-1 100 | a1-1 100 | a1-1 100 | a1-1 100 | a1-1 100 | a1-2 100 | a1-2 100 |
| Epoxy compound (parts) | b-1 | 1.5 | 1.5 | 1.5 | | | | 0.5 | 1.5 | | | 1.5 |
| | b-2 | | | | 1.5 | 1.5 | 1.5 | 1.0 | | 1.5 | | |
| Polycarbodiimide compound (parts) | c-1 | 1.0 | | | 1.0 | | | | | | 1.0 | |
| | c-2 | | 1.0 | | | 1.0 | | 1.0 | | | | 1.0 |
| | c-3 | | | 1.0 | | | 1.0 | | | | | |
| Melting point (°C) | | 202 | 203 | 202 | 203 | 202 | 203 | 202 | 203 | 203 | 204 | 205 |
| Thermal cycling resistance (%) | | 99 | 99 | 99 | 99 | 99 | 99 | 99 | 99 | 99 | 100 | 100 |
| Tensile breaking strength (MPa) | | 23 | 23 | 24 | 23 | 24 | 23 | 23 | 23 | 23 | 24 | 24 |
| Tensile breaking elongation (%) | | 610 | 600 | 610 | 560 | 580 | 560 | 550 | 530 | 590 | 480 | 500 |
| Hydrolysis resistance (%) | | 100 | 100 | 100 | 100 | 100 | 100 | 100 | 0 | 0 | 100 | 100 |
| MI value (g/10min.) | | - | - | - | - | - | - | - | 9 | - | 1 | 2 |
| Strain hardening property | | - | - | - | - | - | - | - | 0 | - | 1.0 | 0.9 |
| Draw down property | | - | - | - | - | - | - | - | 1.5 | - | 3.5 | 3.3 |

### [Table 2]

**Table 2**

| | | Examples | | | | | | Comparative Examples | | | |
|---|---|---|---|---|---|---|---|---|---|---|---|
| | | 12 | 13 | 14 | 15 | 16 | 17 | 1 | 2 | 3 | 4 |
| Polyester block copolymer (parts) | | a1-2 100 | a1-2 100 | a1-2 100 | a1-2 100 | a1-4 100 | a1-4 100 | a1-3 100 | a1-3 100 | a1-5 100 | a1-5 100 |
| Epoxy compound (parts) | b-1 | | | 1.5 | | 1.5 | | | 1.5 | 1.5 | |
| | b-2 | 1.5 | 1.5 | | 1.5 | | | | | | |
| Polycarbodiimide compound (parts) | c-1 | | | | | | | 1.0 | | 1.0 | |
| | c-2 | 1.0 | | | | 1.0 | | | 1.0 | | 1.0 |
| | c-3 | | 1.0 | | | | 1.0 | | | | |
| Melting point (°C) | | 204 | 205 | 205 | 205 | 206 | 205 | 200 | 201 | 201 | 200 |
| Thermal cycling resistance (%) | | 100 | 100 | 99 | 99 | 98 | 100 | 76 | 60 | 51 | 62 |
| Tensile breaking strength (MPa) | | 24 | 24 | 24 | 24 | 23 | 23 | 24 | 23 | 24 | 24 |
| Tensile breaking elongation (%) | | 510 | 520 | 490 | 510 | 530 | 500 | 580 | 590 | 480 | 460 |
| Hydrolysis resistance (%) | | 100 | 100 | 0 | 0 | 0 | 0 | 100 | 100 | 100 | 100 |
| MI value (g/10min.) | | 2 | 2 | 3 | 3 | 8 | - | - | 11 | 2 | 1 |
| Strain hardening property | | 1.2 | 1.2 | 0.8 | 0.9 | 0.2 | - | - | 0 | 0.8 | 1.0 |
| Draw down property | | 3.3 | 3.5 | 2.9 | 2.9 | 1.8 | - | - | 1.1 | 3.2 | 3.2 |

As apparent from Tables, in each of the compositions of Comparative Examples without the acidic phosphate ester and the tin compound, thermal cycling resistance is inferior. On the other hand, in each of the compositions of Examples thermal cycling resistance is not less than 98% and excellent. Moreover, Examples 1 to 7 and 10 to 13 also ensure a high hydrolysis resistance.

## Claims

1. A polyester-series resin composition comprising
(A) a polyester block copolymer, and at least one member selected from the group consisting of (B) a polyepoxy compound and (C) a polycarbodiimide compound,
wherein the polyester block copolymer (A) is a block copolymer obtainable by a reaction of (a1) a crystalline aromatic polyester and (a2) a lactone in the presence of an acidic phosphate ester and a tin compound.

2. A resin composition according to claim 1, wherein the polyester block copolymer (A) is a block copolymer which is obtainable by a reaction of
the crystalline aromatic polyester (a1),
the lactone (a2), and
(a3) at least one compound selected from the group consisting of a polycarboxylic acid which may have a hydroxyl group, a polyol which may have a carboxyl group, and ester-formable derivatives thereof, wherein the polycarboxylic acid has a total of a carboxyl group and a hydroxyl group of not less than three per one molecule, and the polyol has a total of a carboxyl group and a hydroxyl group of not less than three per one molecule
in the presence of the acidic phosphate ester and the tin compound.

3. A resin composition according to claim 1 or 2, wherein the acidic phosphate ester comprises a mono- or dialkyl phosphate, and the tin compound comprises at least one member selected from the group consisting of a tin halide, a tin salt of a carboxylic acid and an alkyltin oxide.

4. A resin composition according to claim 1, wherein the polyepoxy compound (B) comprises at least one member selected from the group consisting of an alicyclic epoxy compound and a glycidyl ester-series epoxy compound.

5. A resin composition according to claim 1, wherein the polycarbodiimide compound (C) is a compound having a constituent unit represented by the following formula: 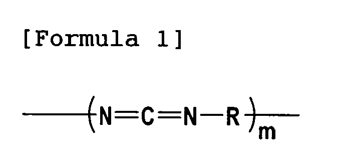 wherein R represents a bivalent hydrocarbon group which may have a substituent, and "m" denotes an integer of not less than 2.

6. A resin composition according to claim 1, wherein the proportion of the polyepoxy compound (B) is 0.05 to 5 parts by weight and the proportion of the polycarbodiimide compound (C) is 0.05 to 5 parts by weight, relative to 100 parts by weight of the polyester block copolymer (A).

7. A resin composition according to claim 1, wherein, in the polyester block copolymer (A), the proportion (weight ratio) of the crystalline aromatic polyester (a1) relative to the lactone (a2) is 30/70 to 97/3 as [(a1)/(a2)], and the proportion of the acidic phosphate ester and that of the tin compound are 0.0001 to 0.03 part by weight and 1 to 10 parts by weight, respectively, relative to 100 parts by weight of the total amount of the crystalline aromatic polyester (a1) and the lactone (a2).

8. A process for producing a polyester-series resin composition, which comprises
allowing (a1) a crystalline aromatic polyester to react with (a2) a lactone in the presence of an acidic phosphate ester and a tin compound to give (A) a polyester block copolymer, and
(i) mixing the polyester block copolymer (A), and at least one member selected from the group consisting of (B) a polyepoxy compound and (C) a polycarbodiimide compound.

9. A polyester-series resin composition obtainable by a process recited in claim 8.

10. A molded article formed from a polyester-series resin composition recited in claim 1.

11. A molded article according to claim 10, which is obtainable by blow molding the polyester-series resin composition.
